# EUROPÄISCHE PATENTSCHRIFT

(11) **EP 1 648 063 B1**
(45) Veröffentlichungstag und Bekanntmachung des Hinweises auf die Patenterteilung: **14.11.2007**
(21) Anmeldenummer: 05020652.3
(22) Anmeldetag: 22.09.2005
(51) Int. Cl.: H01T 19/04, B29C 59/10

(54) **Vorrichtung zur Koronabehandlung von elektrisch isolierenden Materialien, insbesondere Kunststofffolien**
Corona treatment device for electrically insulating materials, particularly plastic foils
Dispositif de traîtement Corona pour des matériaux électriquement isolants, en particulier pour feuilles en matière plastique

(30) Priorität: 15.10.2004 DE 202004016083 U
(43) Veröffentlichungstag der Anmeldung: 19.04.2006
(73) Patentinhaber: Softal electronic Erik Blumenfeld GmbH & Co. KG, 21107 Hamburg (DE)
(72) Erfinder: Prinz, Eckhard, Dipl.-Phys., 22929 Hamfelde (DE); Förster, Frank, Dr. rer. nat., 22297 Hamburg (DE); Palm, Peter, Dr. rer. nat., 22589 Hamburg (DE)
(74) Vertreter: von Eichel-Streiber, Caspar

(56) Entgegenhaltungen:
- DE-A1- 3 700 232
- DE-A1- 3 923 101
- US-A- 4 564 759
- US-A- 4 636 640

## Beschreibung

Die Erfindung betrifft eine Vorrichtung nach dem Oberbegriff des Anspruches 1.

Derartige Vorrichtungen sind in den unterschiedlichsten Ausgestaltungen bekannt. In der Veredelungsindustrie oder bei der Herstellung von Kunststofffolien oder -filmen werden diese durch eine Plasmabehandlung, auch Koronabehandlung genannt, an der Oberfläche aktiviert. Dieses geschieht häufig mit Luft als Prozessgas, aber auch in einer Fremdgasatmosphäre. Die bei den Entladungsvorgängen entstehenden Gase, insbesondere Ozon, werden abgesaugt. Die Vorrichtung besteht aus einer Hochspannungselektrode und einer Gegenelektrode, die normalerweise als Walze ausgeführt ist und über welche die eng anliegende Kunststofffolie geführt wird. Die Hochspannungselektrode ist parallel zur Walze angeordnet, und sie liegt an einer Hochspannung von ca. 10 kV bei ca. 20 bis 40 KHz. Die Walze ist mit dem Erdpotential verbunden. In dem Luftspalt zwischen der Hochspannungselektrode und der Gegenelektrode mit der Kunststofffolie kommt es durch die Potentialdifferenz zur Ausbildung einer Koronaentladung. Die Kunststofffolie wird durch die Koronaentladung aktiviert, d.h. die Oberfläche wird oxidiert.

Durch die Aktivierung wird die Oberflächenspannung der Kunststofffolie erhöht, um so ausreichende Haftung für Druckfarben und Kleber zu gewährleisten. Sind die Kunststofffolien das Ausgangsmaterial für Beutel, Säcke oder Taschen, dürfen diese im Bereich von Siegelnähten nicht koronabehandelt werden, da hierdurch die Siegelnahtfestigkeit stark herabgesetzt wird. Um dieses zu erreichen muss die Koronaentladung in Laufrichtung der Kunststofffolie in diesem Bereich ausgeblendet werden. Erreicht wird dieses durch Segmentierung der Hochspannungselektrode und wegdrehen, herausschwenken oder wegschieben einzelner, lückenlos nebeneinander angeordneter Elektrodensegmente. In den oder dem ausgeblendeten Bereich kommt es durch den Abstand zur Gegenelektrode zu keiner Koronaentladung. Die Potentialdifferenz ist hier nicht ausreichend. In den nicht ausgeblendeten Bereichen wird die Kunststofffolie behandelt, da sie hier meist bedruckt oder mit einem Kleber versehen wird.

Bei bekannten Segmentelektroden ist die Oberflächenaktivierung in Laufrichtung der Kunststofffolie nicht gleichmäßig, d.h. es treten Streifen auf die eine verringerte Oberflächenspannung aufweisen, und in denen die Druckhaftung nicht gewährleistet ist. Diese Ungleichmäßigkeit der Aktivierung ist durch die Seitenflanken der nebeneinander angeordneten Elektrodensegmente bedingt, da an den scharfen Kanten der Stoßstellen quer zur Laufrichtung eine stärkere Entladung stattfindet.

Der Erfindung liegt nun die Aufgabe zugrunde, eine Vorrichtung der eingangs genannten Art zu schaffen, durch die eine gleichmäßige Koronabehandlung von elektrisch isolierenden Materialien, insbesondere Kunststofffolien ermöglicht wird.

Diese Aufgabe wird grundsätzlich durch das Kennzeichen des Anspruches 1 gelöst.

Erfindungsgemäß sind die Entladungskanten in Quer- und Längsrichtung in einzelne vorstehende Entladungszungen aufgeteilt, und diese Entladungszungen sind bei benachbarten Elektrodensegmenten gegeneinander versetzt. Hierdurch wird eine sehr viel gleichmäßigere Oberflächenbehandlung erreicht, da das Zündverhalten der Koronaentladung verbessert wird. Konkret kann die für eine gleichmäßige Zündung der Koronaentladung erforderliche elektrische Energie abgesenkt werden, trotzdem bleibt die Entladung gleichmäßig und Streifen treten nicht auf. Die Anzahl der Entladungszungen von benachbarten Elektrodensegmenten muss nicht gleich sein.

Vorteilhafterweise sind die Elektrodensegmente wie in Anspruch 2 unter Schutz gestellt, quer zur Laufrichtung der Kunststofffolie beabstandet und schmaler als in Längsrichtung. Hierdurch können die Behandlungsgase, ob nun Luft oder Fremdgase gleichmäßig durch die Hochspannungselektrode hindurch abgesaugt werden, so dass für eine effektivere Kühlung der Segmente gesorgt wird.

Schließlich ist es noch möglich, die Elektrodensegmente quer zur Laufrichtung der Kunststofffolie zu kröpfen, zu schränken oder in anderer Weise aus der Ebene der einzelnen Elektrodensegmente herauszuversetzen, so dass die Entladungszungen der Elektrodensegmente nicht auf einer Linie liegen. In Laufrichtung der Kunststofffolie sind die Entladungszungen der Elektrodensegmente versetzt, so dass ein entsprechend breiterer "Behandlungsstreifen" entsteht, der für eine weitere Vergleichmäßigung der Oberflächenbehandlung sorgt.

Im folgenden wird die Erfindung unter Hinweis auf die Zeichnung anhand zweier Ausführungsbeispiele näher erläutert.

### Es zeigt:

- Fig. 1: einen schematischen Querschnitt durch eine Ausführungsform einer Vorrichtung nach der Erfindung;
- Fig. 2: eine Ansicht auf die Hochspannungselektrode der Ausführungsform nach Fig. 1 von unten;

- Fig. 3: eine Ansicht auf die Hochspannungselektrode der Fig. 1 von links; und
- Fig. 4: eine der Fig. 2 entsprechende Ansicht, jedoch einer anderen Ausführungsform mit nicht gekröpften Elektrodensegmenten.

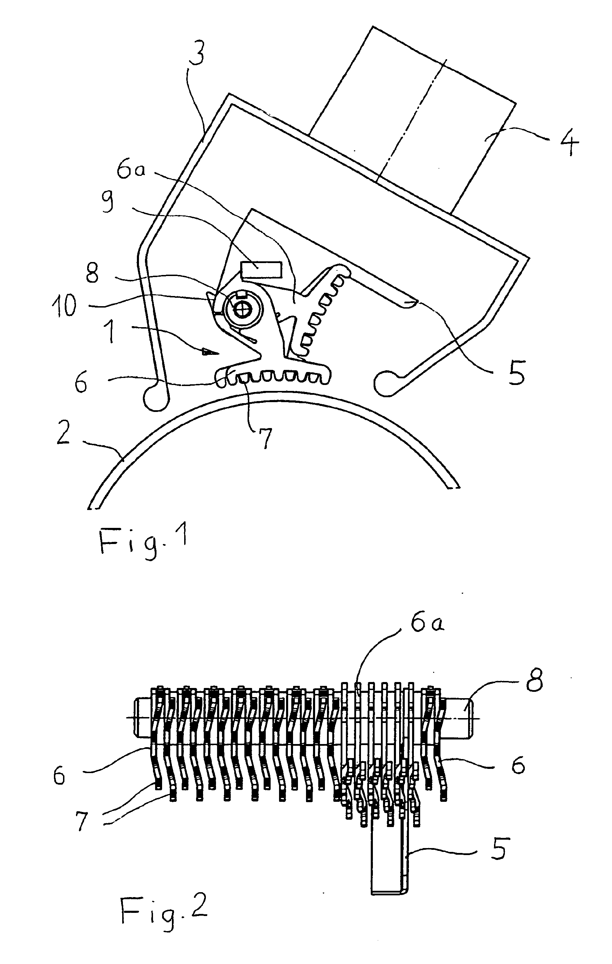

Die in den Figuren 1 bis 3 dargestellte Vorrichtung besteht aus einer Hochspannungselektrode 1, die in einem Unterdruckgehäuse 3 mit Absaugstutzen 4 angeordnet ist. Der Hochspannungselektrode 1 gegenüber liegt die Gegenelektrode 2, bei der es sich um eine Walzenelektrode handelt. Über diese Gegenelektrode 2 wird die zu behandelnde Kunststofffolie (nicht gezeigt) geführt.

Die Hochspannungselektrode 1 besteht aus einer Vielzahl von Elektrodensegmenten 6, deren Entladungskanten in Laufrichtung der zu behandelnden Kunststofffolie verlaufen, d.h. senkrecht zur Achsrichtung der als Walze ausgebildeten Gegenelektrode 2. Die einzelnen Elektrodensegmente 6 sind auf einer Welle 8 schwenkbar oder drehbar befestigt, so dass sie aus einer Behandlungsstellung in eine Nichtbehandlungsstellung 6a geschwenkt werden können. Dieses ist in Fig. 1 deutlich erkennbar. In der Nichtbehandlungsstellung wird eine Oberflächenaktivierung nicht vorgenommen, so dass ein späteres Versiegeln oder dgl. ohne Einbußen möglich ist. Mit 9 ist eine Anschlagstange bezeichnet, gegen die die einzelnen Elektrodensegmente 6 in die Behandlungsstellung schwenkbar sind und in dieser genau arretiert werden. Jedes Elektrodensegment 6 weist eine entsprechende Nase 10 auf, die an der Anschlagstange 9 in der Behandlungsstellung zur Anlage gelangt. Ein Halter 5 zur Lagerung der Welle 8 bildet ein ortsfestes Teil des Gehäuses.

Die Entladungskanten der Elektrodensegmente 6 weisen Entladungszungen 7 auf, die in Laufrichtung der Kunststofffolie beabstandet sind und in Richtung auf diese vorstehen. Der Abstand der Zungen kann 1 bis 20 mm betragen, vorzugsweise 5 bis 10 mm. Die Entladungszungen 7 von zwei nebeneinander liegenden Elektrodensegmenten 6 sind in Laufrichtung der Kunststofffolie gegeneinander versetzt, d.h. sie stehen auf Lücke, wie dieses beim Betrachten der Figuren 1 und 2 deutlich wird. Hierdurch wird eine sehr viel gleichmäßigere Oberflächenbehandlung erreicht.

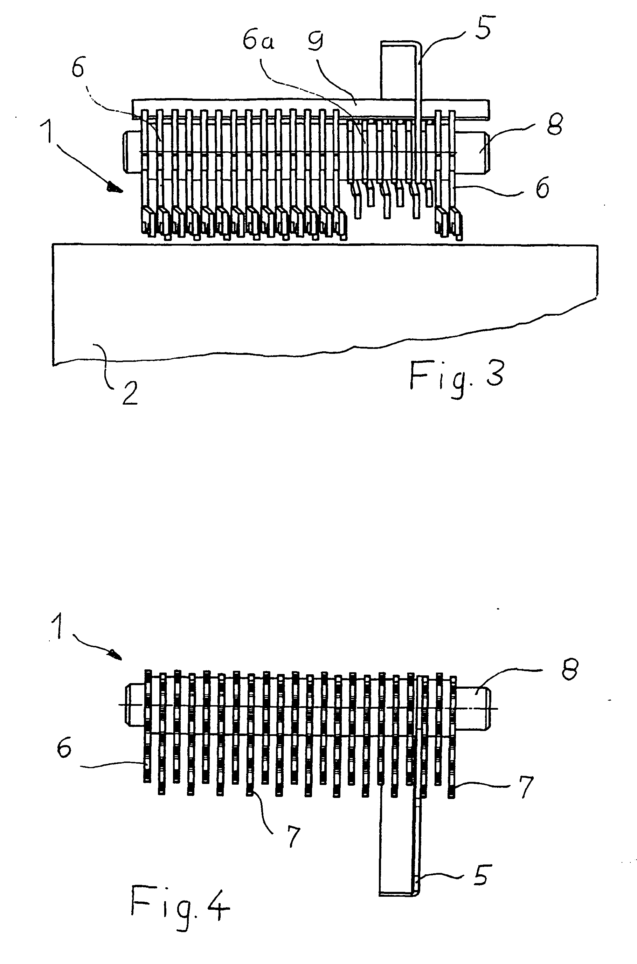

Weiterhin sind bei der Ausführungsform nach den Figuren 2 und 3 die Entladungskanten mit den Entladungszungen 7 seitlich aus der Ebene dieser Entladungskanten heraus gekröpft oder geschränkt, so dass die Entladungszungen in Laufrichtung der Kunststofffolie nicht auf einer Linie liegen. Hierdurch wird der Behandlungsstreifen breiter und durch das "Überlappen" wird die Behandlung weiterhin vergleichmäßigt.

Bei der Ausführungsform nach Fig. 4 fehlt es an der Kröpfung aus der Ebene der Entladungskanten heraus. Hier sind lediglich die Entladungszungen 7 gegeneinander versetzt, d.h. bei nebeneinander liegenden Elektrodensegmenten 6 stehen sie auf Lücke, so wie auch in Fig. 1 gezeigt.

Es sind normalerweise 2 bis 20, vorzugsweise 5 bis 7 Entladungszungen vorhanden. Ein Elektrodensegment hat eine Dicke von 1 bis 10 mm, vorzugsweise 1,5 bis 2,5 mm. Der Abstand zwischen benachbarten Segmenten beträgt 1 bis 20 mm, vorzugsweise 2,5 bis 5 mm. Der Abstand zwischen den Elektrodensegmenten und der Kunststofffolie auf der Gegenelektrode liegt bei 0,5 bis 10 mm, vorzugsweise bei 1,5 mm.

Normalerweise wird bei Atmosphärendruck gearbeitet. Es ist aber auch möglich, einen Unterdruck im Bereich von 500 Millibar zu erzeugen, oder auch mit Überdruck zu arbeiten.

Die Elektroden liegen an einer Hochspannung von 10 bis 60 kV, wobei mit einer Frequenz von 5 bis 100 KHz gearbeitet wird.

Dadurch, dass die Elektrodensegmente einzelne in Laufrichtung beabstandete Entladungszungen aufweisen, die bei nebeneinander liegenden Elektrodensegmenten gegeneinander versetzt sind, wird eine sehr viel gleichmäßigere Oberflächenaktivierung erreicht. Die Kröpfung oder Schränkung der einzelnen Elektrodensegmente sorgt für eine "Überlappung" der Behandlungszonen und damit für eine weitere Vergleichmäßigung. Der Abstand zwischen den einzelnen Elektrodensegmenten ermöglicht eine bessere und gleichmäßigere Luftströmung zum Kühlen und Absaugen.

## Patentansprüche

1. Vorrichtung zur Koronabehandlung von elektrisch isolierenden Materialien, insbesondere Kunststofffolien, mit einer Gegenelektrode, über die die zu behandelnde Kunststofffolie geführt wird, und mit einer quer zur Laufrichtung der Kunststofffolie verlaufenden Hochspannungselektrode, die durch eine Vielzahl von Elektrodensegmenten gebildet ist, die in Laufrichtung der zu behandelnden Kunststofffolie gerichtet und quer zur Laufrichtung aus dem Behandlungsbereich heraus schwenkbar sind, **dadurch gekennzeichnet, dass** die Entladungskanten der
Elektrodensegmente (6) in einzelne in Laufrichtung der Kunststofffolie beabstandete und in Richtung auf die Kunststofffolie vorstehenden Entladungszungen (7) aufgeteilt sind, und
dass die Entladungszungen (7) benachbarter Elektrodensegmente in Laufrichtung der Kunststofffolie derart gegeneinander versetzt sind, dass sie auf Lücke stehen.

2. Vorrichtung nach Anspruch 1, **dadurch gekennzeichnet, dass** die nebeneinander liegenden Elektrodensegmente (6) quer zur Laufrichtung der Kunststofffolie beabstandet sind.

3. Vorrichtung nach Anspruch 2, **dadurch gekennzeichnet, dass** der Abstand zwischen den Elektrodensegmenten (6) in der Größenordnung der ein- bis dreifachen Dicke der Elektrodensegmente liegt.

4. Vorrichtung nach einem oder mehreren der vorstehenden Ansprüche, **dadurch gekennzeichnet, dass** die Elektrodensegmente quer zur Laufrichtung der Kunststofffolie gekröpft oder geschränkt sind.

5. Vorrichtung nach einem oder mehreren der vorstehenden Ansprüche, **dadurch gekennzeichnet, dass** die einzelnen Segmente aus Edelstahl hergestellt sind.

## Claims

1. Device for the corona treatment of electrically insulating materials, particularly plastic sheets, having a counterelectrode guided over the plastic sheet to be treated, and having a high voltage electrode running transversely to the plastic sheet running direction and which is formed by a plurality of electrode segments directed in the running direction of the plastic sheet to be treated and pivotable out of the treatment area transversely to the running direction, **characterized in that** the discharge edges of the electrode segments (6) are subdivided into individual discharge tongues (7) spaced in the plastic sheet running direction and projecting in the direction of the plastic sheet and that the discharge tongues (7) of adjacent electrode segments are so mutually displaced in the plastic sheet running direction that they are staggered.

2. Device according to claim 1, **characterized in that** the juxtaposed electrode segments (7) are spaced transversely to the plastic sheet running direction.

3. Device according to claim 2, **characterized in that** the spacing between the electrode segments (6) is of the order of magnitude of one to three times the thickness of the electrode segments.

4. Device according to one or more of the preceding claims, **characterized in that** the electrode segments are offset or crossed transversely to the plastic sheet running direction.

5. Device according to one or more of the preceding claims, **characterized in that** the individual segments are made from high quality steel.

## Revendications

1. Dispositif de traitement Corona pour des matériaux électriquement isolants, en particulier pour des feuilles en matière plastique, doté d'une contre-électrode permettant de guider la feuille en matière plastique à traiter et d'une électrode haute tension s'étendant à la transversale de la direction de course de la feuille en matière plastique, formée par un grand nombre de segments d'électrode orientés dans la direction de course de la feuille en matière plastique à traiter et pouvant pivoter hors de la zone de traitement à la transversale de la direction de course, **caractérisé en ce que** les arêtes de décharge des segments d'électrode (6) sont divisées en différentes lames de décharge (7) faisant saillie dans la direction de la feuille en matière plastique et écartées dans la direction de course de la feuille en matière plastique et **en ce que** les lames de décharge (7) des segments d'électrode voisins sont décalées les unes des autres dans la direction de course de la feuille en matière plastique de manière à ce qu'elles se trouvent sur des creux.

2. Dispositif selon la revendication 1, **caractérisé en ce que** les segments d'électrode (6) adjacents sont écartés à la transversale de la direction de course de la feuille en matière plastique.

3. Dispositif selon la revendication 2, **caractérisé en ce que** l'écart entre les segments d'électrode (6) est de l'ordre d'une à trois fois l'épaisseur des segments d'électrode.

4. Dispositif selon une ou plusieurs des revendications précédentes, **caractérisé en ce que** les segments d'électrode sont coudés ou pliés en croisé à la transversale de la direction de course de la feuille en matière plastique.

5. Dispositif selon une ou plusieurs des revendications précédentes, **caractérisé en ce que** les différents segments sont fabriqués en acier spécial.
